# EUROPEAN PATENT APPLICATION

(11) **EP 4 679 197 A1**
(43) Date of publication of application: **14.01.2026**
(21) Application number: 25188846.7
(22) Date of filing: 10.07.2025
(51) Int. Cl.: G04F 5/14, G21K 1/00, H03L 7/26, H05H 3/02

(54) **VACCUUM-TIGHT ENCLOSURE FOR BEAM APPARATUS, BEAM APPARATUS, AND METHOD FOR MANUFACTURING A VACUUM-TIGHT ENCLOSURE**

(30) Priority: 10.07.2024 EP 24187802
(71) Applicant: Adtran Networks SE, 98617 Meiningen (DE)
(72) Inventor: Dolgovskiy, Vladimir, 2074 Marin-Epagnier (CH); Kroll, Fabiano, 2000 Neuchâtel (CH); Berthoud, Patrick, 2515 Preles (CH)
(74) Representative: Bratovic, Nino Maria

(57) **Abstract**

The invention provides a vacuum-tight enclosure for a beam apparatus, a beam apparatus, and a method for manufacturing a vacuum-tight enclosure. The vacuum-tight enclosure (100) is essentially formed of:
a beam input interface (101) for receiving a molecular or atomic beam (7),
a first optical interaction volume (140),
a microwave cavity (120) comprising a U-shaped portion,
a second optical interaction volume (150),
a straight hollow beam enclosure (130) for enclosing the molecular or atomic beam (7) between the first optical interaction volume (140) and the second optical interaction volume (150),
and
a vacuum source interface (109), and
a plurality of optical port interfaces (159),
such that a vacuum is generatable within the vacuum-tight enclosure (100) when a vacuum source (1080) is vacuum-tightly attached to the vacuum source interface (109), a beam source container (1070) is vacuum-tightly attached to the beam input interface (101) and the plurality of optical port interfaces (159) are vacuum-tightly sealed.

## Description

### FIELD OF THE INVENTION

The present invention relates to a vacuum-tight enclosure for a beam apparatus, a beam apparatus, and a method for manufacturing a vacuum-tight enclosure. The beam apparatus may in particular be an atomic clock such as a Cesium clock.

### BACKGROUND OF THE INVENTION

The quantized energy levels in particles of atomic or molecular beams can be used to determine frequencies with high precision. One example of this is an atomic beam clock, for example a Cesium beam clock in which a beam of Cesium atoms is prepared in various ways so that, while in the beginning the beam comprises Cesium atoms in various quantum states, after the preparation only Cesium atoms in one particular state remain. In this state, only a microwave field with a particular frequency corresponding to the unperturbed ground state hyperfine frequency will interact with these atoms. This allows a frequency tuning of the local microwave oscillator by observing whether or not it interacts with the specially prepared Cesium atoms. Of course, other atoms or molecules can be used similarly as well.

As high precision in all elements is key in these kinds of apparatuses, external influences must be eliminated as much as possible. This typically includes, apart from magnetic shielding etc., that the atomic beam should travel in a vacuum.

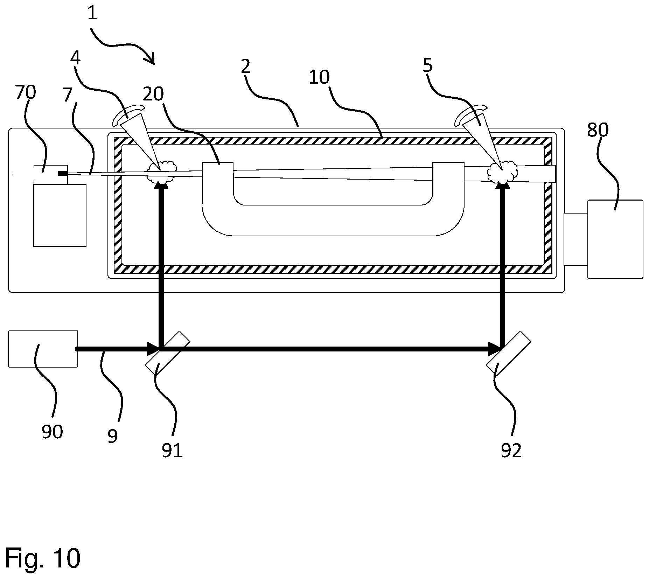

An atomic beam clock, or - more generally- a beam apparatus 1 according to the prior art is shown in Fig. 10. The beam apparatus 1 comprises a large vacuum envelope 2, the vacuum being produced and maintained by an attached vacuum pump 80. An atomic beam 7 is emitted from an atomic oven 70 arranged within the vacuum envelope 2. After its generation, the beam 7 enters a magnetic shield 10 also arranged within the vacuum envelope 2, which acts as an electromagnetic shield, albeit an imperfect one due to typically numerous openings. The magnetic shield 10 creates a large volume within the vacuum envelope 2, within which all interactions with the beam 7 take place, and some additional elements are arranged. The main purpose of the magnetic shield 10 is to shield the atomic beam path from any external magnetic fields.

A laser source 90 generates a laser beam 9, which is split by a beamsplitter 91. A first portion of the laser beam 9 enters the vacuum envelope 2 and the magnetic shield 10 and interacts with the atomic beam 7 to prepare it in a first manner. Light of the laser beam 9 after the interaction may be guided outside of the vacuum envelope 2 as a calibration radiation in order to analyze it, for example for calibrating (or: tuning) the laser source 90 using closed-loop control.

Thereafter, the atomic beam 7 interacts with specifically generated microwaves in a first area, then the atomic beam propagates without microwave interaction, and then interacts again with the generated microwaves in a second area, in this order. A U-shaped microwave cavity 20 (also called a "Ramsey cavity") may be arranged to guide the microwaves to the first and the second area. Then, the atomic beam 7 interacts with a second portion of the laser beam 9. This second portion is first transmitted by the beamsplitter 91 and then deflected by a reflective mirror 92 into the vacuum envelope 2 and the magnetic shield 10, via corresponding optical ports.

Light of the laser beam 9 after the interaction in the second area forms a detection radiation 5. When the laser beam 9 is tuned to correspond exactly to an energy difference between the state in which the Cesium atoms of the atomic beam 9 has been finally prepared and another state of the Cesium atoms, its intensity changes starkly, indicating the current frequency of the laser beam 9 with high accuracy and precision.

A beam apparatus of this type, and a more detailed explanation of its function, can be found, for example, in US patent application No. 10,113,905 B2. One disadvantage of these types of beam apparatuses is that their assembly is highly complex and, given that most of the components have to be aligned precisely within the vacuum enclosure prior to their connection by welding, challenging and expensive.

### SUMMARY OF THE INVENTION

It is therefore one objective of the present invention to provide a technology for an improved beam apparatus, in particular one with a smaller size than in the known prior art. Moreover, improved manufacturing methods are another objective of the present invention.

These objectives, among others which will become apparent in the following, are solved by the subject-matter of the independent claims.

Accordingly, the invention provides, according to a first aspect of the invention, a vacuum-tight enclosure for a beam apparatus, wherein the vacuum-tight enclosure is essentially (or completely) formed of:
a beam input interface for receiving a molecular or atomic beam,
a first optical interaction volume,
a microwave cavity,
a second optical interaction volume,
a straight hollow beam enclosure for enclosing (or: housing) a beam (the beam being input into the vacuum-tight enclosure at the beam input interface when the vacuum-tight enclosure is in use) between the first optical interaction volume and the second optical interaction volume,
   and
a vacuum source interface,
and a plurality of optical port interfaces;
such that a vacuum is generatable within the vacuum-tight enclosure when a vacuum source is vacuum-tightly attached to the vacuum source interface and a beam source container is vacuum-tightly attached to the beam input interface and the plurality of optical port interfaces are vacuum-tightly sealed (for example with vacuum-tight optical ports or blank flanges).

The straight hollow beam enclosure may also be designated as a "straight hollow beam guide" or as a "tubular guide" in the sense that it surrounds and accompanies (and thus, guides) the beam in between the first and the second optical interaction volumes. The straight hollow beam enclosure ensures propagation of the molecular or atomic beam in vacuum, when the vacuum-tight enclosure is in use, i.e., when a vacuum is formed therein, and - according to the present invention - its outside is exposed to atmosphere.

Any or all of the optical ports may be realized, for example, as a viewport, as a fiber coupler, or the like. The vacuum-tight enclosure may be fitted with an optical port, or a sealing element, at any or each of the plurality of optical port interfaces.

The first optical interaction volume may also be designated as a "first atomic state preparation volume". The second optical interaction volume may also be designated as a "atomic state readout volume", or as a "atomic state detection volume".

One of the main advantages of the invention is the smaller volume (compared to the prior art) in which the vacuum is (or: has to be) formed. This is achieved mostly by the idea of, instead of putting various elements within a large vacuum envelope as in the prior art, forming a vacuum-tight enclosure by these elements themselves and putting the other remaining elements outside.

Among many other advantages (e.g. regarding the spatial footprint of the devices, the costs of materials in manufacturing, the weight of the beam apparatus, and so on) is that several elements may be provided, ceteris paribus, in scaled-down versions (compared to what the prior art would have to use to achieve the same effect).

For example, typically vacuum pumps, e.g. ion pumps, are used as vacuum sources. However, these may also cause electric or magnetic spikes that may interfere with the beam in undesired ways, or create strong inhomogeneous magnetic fields influencing the atomic beam in undesired ways, often necessitating the implementation of multilayer magnetic shields. With the present invention, smaller-dimensioned vacuum pumps (e.g. ion pumps) may be used, or even passive non-evaporable getter pumps, NEG pumps. NEG materials make use of the metallic surface sorption of gas molecules, and are typically porous alloys or powder mixtures of aluminum (Al), zirconium (Zr), titanium (Ti), vanadium (V) and/or iron (Fe).

Alternatively, or additionally, the straight hollow beam enclosure may be lined, at its interior, with a getter material, for example graphite getters.

The term "vacuum-tight enclosure" is used herein to designate a piece of equipment that is configured to maintain a vacuum when a vacuum source (e.g., a vacuum pump) is added, optionally after other openings into the enclosure are sealed. Thus it comprises interfaces that allow the (vacuum-tight) fitting of a vacuum source and optionally of other vacuum-tight seals, for example for attaching an external beam source container. The vacuum-tight enclosure may also be provided as vacuum-tightly sealed state, for example, with a vacuum source and an external beam source container already vacuum-tightly attached. Going further, it may also be provided with a vacuum formed therein.

Two elements being "vacuum-tightly" attached, or being connected via a vacuum-tight interface, shall be understood to mean that, when said elements themselves are vacuum-tight, then a vacuum can be formed and maintained on the inside of the two elements, over the vacuum-tight interface. In particular during use of the vacuum-tight enclosure or the beam apparatus in most variants there will be a vacuum on the inside of the vacuum-tight interface, and atmosphere outside of it and around it.

The term atmosphere has to be understood in a wide sense here in that it simply refers to an air pressure that is mainly independent of the air pressure in the vacuum area.

For example, specifically, the beam source container will in practice typically be vacuum-tightly attached to the vacuum-tight enclosure, such that the beam generated by the vacuum source may travel in (one and the same) vacuum from the beam source into the vacuum-tight enclosure, while on the outside of both the beam source container and the vacuum-tight enclosure there will be atmosphere. The same is valid for the vacuum pump itself.

The beam input interface and/or the vacuum source interface may preferably be realized as, or provided with, CF flanges, i.e. with metal-to-metal seals with knife-edge flanges, for example according to the international standard ISO 3669, third edition 2020-02, ISO 2020 and/or the ASTM E2734/E2734M-10-2018 standard. In this way, the vacuum-tight enclosure according to the invention is flexibly usable for many different combinations of beam source containers and vacuum sources. In other words, this makes the vacuum-tight enclosure modular so that it can freely be combined with other elements if and when necessary.

Specifically, in this manner, the beam source container is easily replaceable when it is depleted. Similarly, the vacuum source is easily replaceable in case it breaks down or needs maintenance. Likewise, the graphite getter replacements are readily available when the previous graphite getters are at the end of their life cycle, e.g. once fully saturated with atomic (e.g., Cs) vapor.

Preferably, the vacuum-tight enclosure (or at least its main body) is monolithic, i.e., it is produced integrally in one piece, without any soldering, brazing, welding etc. being necessary. This reduces the effort (and costs) in producing it, and at the same time increases its structural integrity, making the vacuum-tight enclosure self-supporting. In some variants, however, one or more parts of the vacuum-tight enclosure may be provided separately and then joined, e.g. by soldering and/or brazing and/or welding, to produce the vacuum-tight enclosure.

The optical interaction volumes may also be designated as "beam/laser interaction volumes", BLIV, as they are configured to allow interaction between the molecular or atomic beam and the laser beam.

In some advantageous embodiments, refinements, or variants of embodiments, the microwave cavity has a U-shaped portion (or is itself essentially or completely U-shaped), and in particular is configured as a Ramsey microwave cavity, i.e., such as to provide two short separated microwave interaction regions. The hollow beam enclosure may extend essentially between two end points of the U-shaped portion of the microwave cavity (or of a U-shaped microwave cavity) and interconnects them. Each of the two ends of the hollow beam enclosure thus is directly connected to, and opens into, a respective arm of the "U" of the U-shaped portion of the microwave cavity (or of a U-shaped microwave cavity). Accordingly, in order to keep the atomic beam from interacting with any particles between the arms of the U-shaped portion of the microwave cavity, it is only the (comparatively small) volume of the hollow beam enclosure in which a vacuum has to be maintained, as compared to the entire vacuum envelope in the prior art.

Generally, a U-shape may be any shape with two ends connected by a curved body that does not intersect with a line between the two ends. The U-shape may be higher than wider, or wider than high, or equally wide and high. Said two ends here comprise the microwave interaction regions, wherein in case of multiple U-shaped portions some or all of them may share the same microwave interaction regions.

The microwave interaction regions may also be designated as "beam/microwave interaction regions" as they are configured to allow interaction of the molecular or atomic beam with microwave radiation from the microwave cavity.

In some advantageous embodiments, refinements, or variants of embodiments, the first optical interaction volume is formed by a first housing portion arranged between the beam input interface and the atomic beam enclosure. The first housing portion may comprise at least one vacuum-tight first optical entry port (e.g., vacuum-tightly connected to a first optical entry port interface) for receiving an optical preparation laser beam from outside of the vacuum-tight enclosure, and for allowing an interaction of the optical preparation laser beam received through the first optical entry port with the atomic or molecular beam received at the beam input interface. Each preparation laser beam may be, for example, a pumping laser beam (e.g., for preparing a molecular state or an atomic state, respectively), or a cooling laser beam (e.g., for producing cold atoms).

The first housing portion may additionally comprise a (or: at least one) vacuum-tight first optical detection port (preferably vacuum-tightly connected to a first optical detection port interface) for guiding light of said interaction out of the first housing portion (e.g., for collecting an atomic fluorescence caused by the interaction), or for guiding out the portion of the laser light after the interaction with the atoms, e.g. for measuring an absorption thereof. The respective optical fluorescence (or absorption) signal may be used for stabilization of the laser frequency or intensity, for example in an open or closed control loop. For guiding out the portion of the laser light after its interaction with the atoms, the first optical detection port is arranged linearly opposite the first optical entry port. For guiding the fluorescence signal out, the first optical detection port is advantageously arranged perpendicular to the first optical entry port.

In some advantageous embodiments, refinements, or variants of embodiments, the first optical interaction volume comprises a plurality of vacuum-tight optical entry ports, in particular a plurality of opposing pairs of vacuum-tight optical entry ports such as two or three pairs, each of the plurality of vacuum-tight optical entry ports configured for receiving a respective optical cooling laser beam (as one kind of a preparation laser beam), preferably for shaping the molecular or atomic beam received at the beam input interface, more preferably for focusing the molecular or atomic beam received at the beam input interface. The first optical interaction volume may be configured such that, when the optical cooling laser beams are guided into it via the optical entry ports, they form a so-called optical molasses.

In some advantageous embodiments, refinements, or variants of embodiments, the second optical interaction volume is formed by a second housing portion arranged between the atomic beam enclosure and the vacuum source interface. The housing portion may comprise a vacuum-tight second optical entry port (preferably vacuum-tightly connected to a second optical entry interface) for receiving an optical detection laser beam from outside of the vacuum-tight enclosure and for allowing an interaction of the optical detection laser beam received through the second optical entry port and the atomic or molecular beam.

The second housing may additionally comprise a vacuum-tight second optical detection port (preferably vacuum-tightly connected to a second optical detection port interface) for collecting an atomic fluorescence after the interaction, or for allowing the optical detection laser beam to leave the vacuum-tight enclosure after its interaction with the atomic or molecular beam. Again, either a fluorescence signal or an absorption signal, respectively, may be generated. For guiding out the portion of the laser light after its interaction with the atoms, the second optical detection port is arranged linearly opposite the second optical entry port. For guiding the fluorescence signal out, the first optical detection port is advantageously arranged perpendicular to the first optical entry port.

In each case, the first/second optical detection port is preferably arranged in perpendicular to the first/second optical entry port, respectively, for capturing the fluorescence signal.

In some advantageous embodiments, refinements, or variants of embodiments, the first housing portion and/or the second housing portion is formed in touch with the microwave cavity. In this way, the vacuum-tight enclosure is formed with an advantageously small volume and high structural integrity.

In some advantageous embodiments, refinements, or variants of embodiments, the first housing portion comprises a first beam sink configured to absorb the optical preparation laser beam (in particular when the optical preparation laser beam is an optical pumping laser beam) after its interaction with the molecular or atomic beam. This is preferred in case the first optical detection port is configured to guide fluorescent light from said interaction out of the first interaction volume. The first beam sink may be preferably vacuum-tightly connected to an optical port interface formed in the first housing portion (e.g., a first beam sink interface).

In some advantageous embodiments, refinements, or variants of embodiments, the second housing portion comprises a second beam sink configured to absorb the optical detection laser beam after its interaction with the molecular or atomic beam. This is preferred in case the second optical detection port is configured to guide fluorescent light from said interaction out of the second interaction volume. The second beam sink may be preferably vacuum-tightly connected to an optical port interface formed in the second housing portion (e.g., a second beam sink interface).

A beam sink may comprise, for example, an absorbent plate (e.g. made from glass), a beam dump (e.g. a metallic beam dump), anodized aluminium and/or graphite. The beam sink may be vacuum-tightly attached to an optical port interface formed in the vacuum-tight enclosure, in particular in its main body. The beam sink will be arranged in line with the corresponding optical entry port, i.e., on a surface of the corresponding housing portion opposite to the surface in which the corresponding optical entry port is arranged.

The - preferably - monolithic main body of the vacuum-tight enclosure may be manufactured up to, and including, the optical port interfaces. Then, various optical devices separately manufactured may be connected to these port interfaces, e.g., the first optical entry port, the first optical detection port, and/or the first beam sink, to optical port interfaces of the first housing and/or the second optical entry port, the second optical detection port, and/or the second beam sink, to optical port interfaces of the second housing.

In some advantageous embodiments, refinements, or variants of embodiments, the vacuum-tight enclosure (or at least its main body) is formed essentially monolithically, preferably from metal, in particular by additive manufacturing. Advantageously, non-magnetic metals, compounds, or alloys are used, preferably comprising, or consisting of, copper, titanium, aluminium, and/or steel. Stainless steel is preferred in some instances over, for example, aluminium, because it is easier and safer to weld or solder, for example for soldering a feedthrough antenna to the vacuum-tight enclosure. In other instances, aluminium can be preferred because of its non-magnetic nature.

In some advantageous embodiments, refinements, or variants of embodiments, the beam input interface is configured to receive the molecular or atomic beam from a beam source container external to the vacuum-tight enclosure. This means that the beam source container closes the vacuum-tight enclosure on the side of the input interface and is thus easier accessible, for example for initializing the beam generation, for maintenance, for replacement, and so on, since no external vacuum envelope has to be removed or break-opened first.

The beam source container may in particular be provided as tight metal tank (e.g. made from copper) surrounding a break seal ampoule (e.g. made from glass) containing a (heated or heatable) depository of molecules or atoms. In this case, the molecules or atoms may be simply released by mechanically deforming (e.g., pinching) the surrounding metal tank such that the ampoule therein shatters. This mitigates any risks typically involved with opening an atomic oven remotely via electric or thermal means, which is necessary when the atomic oven is placed within a vacuum envelope in the prior art. By contrast, the simple release of atomic source vapor from a break seal ampoule is safer and does not require a flow box or prior manipulations with oven filling.

In some advantageous embodiments, refinements, or variants of embodiments, the hollow beam enclosure acts as an electromagnetic shield providing a microwave cutoff frequency for the molecular or atomic beam travelling within the hollow beam enclosure. In this way, the molecular or atomic beam travels with fewer interferences, without the need for any additional element.

In some advantageous embodiments, refinements, or variants of embodiments, a non-evaporating getter, NEG, material is arranged within the vacuum-tight enclosure for trapping the non-desirable atoms that were not properly collimated. The NEG material may comprise a porous alloy and or a powder mixture of aluminum, zirconium, titanium, vanadium and/or iron, while the most common choice of cesium gettering material is graphite. The vacuum-tight enclosure interfaces may be opened in order to perform the maintenance or replacement of the (then) saturated getters at the end of their lifetime.

The invention also provides, according to a second aspect of the present invention, a beam apparatus, comprising:
the vacuum-tight enclosure according to any embodiment of the first aspect of the present invention;
a beam source container removably attachable or attached to the beam input interface in a vacuum-tight manner, and
a vacuum source removably attachable or attached to the vacuum source interface in a vacuum-tight manner.

The beam apparatus may be an atomic clock, in particular a Cesium clock, specifically an optically pumped atomic clock, in particular an optically pumped Cesium clock.

In some advantageous embodiments, refinements, or variants of embodiments, the beam source container can be opened by direct physical manipulation from outside the vacuum-tight enclosure, and preferably comprises a break seal ampoule that can be broken by said direct physical manipulation. As has been described in the foregoing, the beam source container may comprise a tight metal container comprising the break seal ampoule (e.g. made from glass), whereas the break seal ampoule can be broken by physical pinching, deforming, or pressing the metal container from the outside.

In some advantageous embodiments, refinements, or variants of embodiments, the beam apparatus comprises a magnetic shield, wherein a volume between the magnetic shield and the vacuum-tight enclosure is open to ambient atmosphere. More precisely:
the beam apparatus is configured such that the volume between the magnetic shield and the vacuum-tight enclosure is open to ambient atmosphere in particular when the beam apparatus is in use.

As has been described in the foregoing, this greatly simplifies all tasks of adjusting, initializing, programming, maintaining, and so on of all elements that are arranged outside of the vacuum-tight enclosure.

In some advantageous embodiments, refinements, or variants of embodiments, the beam apparatus further comprises a printed circuit board attached to the outside of the vacuum-tight enclosure, the printed circuit board comprising at least a coil structure (the so-called C-field coils) for generating a DC magnetic field acting within the hollow beam enclosure and/or along atomic beam path. The printed circuit board may host photodiodes for collecting the light guided out of the first and second optical interaction volume (for example out of the pumping and detection zone implemented by them, respectively) and the corresponding photodetection electronics, such as a trans-impedance pre-amplification stage. In some variants, printed circuit boards are provided on (and attached to) both sides of the vacuum-tight enclosure, for providing a more homogeneous DC magnetic field.

The invention further provides, according to a third aspect, a method for manufacturing a vacuum-tight enclosure. The method comprises a step of additively manufacturing a main body of the vacuum-tight enclosure monolithically, in particular from a metal, e.g. from stainless steel or aluminum, with
a beam input interface for receiving an atomic or molecular beam,
a first optical interaction volume,
a microwave cavity (with one or more microwave interaction regions),
a second optical interaction volume,
a straight hollow beam enclosure for enclosing a molecular or atomic beam (to be input at the beam input interface into the vacuum-tight enclosure when the vacuum-tight enclosure is in use) between the first optical interaction volume and the second optical interaction volume,
   and
a vacuum source interface.

The method may comprise additional steps, such as welding a microwave antenna to the microwave cavity, arranging a non-evaporation getter material within the vacuum-tight enclosure, installing optical ports or other (optical) devices (such as beam sinks) at corresponding optical port interfaces within housings forming the first optical interaction volume and/or the second optical interaction volume, attaching a beam source container to the beam input interface, attaching a vacuum source to the vacuum source interface, and/or the like.

The invention also provides, according to a fourth aspect, a computer-readable, non-transient data storage medium comprising 3D structure data representing a vacuum-tight enclosure according to the first aspect of the present invention, and further comprising executable program code configured to instruct an additive manufacturing device to additively manufacture the vacuum-tight enclosure according to the 3D structure data.

The invention also provides, according to a fifth aspect, a data stream comprising 3D structure data representing a vacuum-tight enclosure according to the first aspect of the present invention, and further comprising control instructions (e.g., included in an executable program code) configured to instruct an additive manufacturing device to additively manufacture the vacuum-tight enclosure according to the 3D structure data.

Further technical considerations, advantages as well as variants and refinements are presented in the following, in particular in the dependent claims as well as in the specification with respect to the drawings and the drawings themselves.

### BRIEF DESCRIPTION OF THE DRAWINGS

The invention will be explained in greater detail with reference to exemplary embodiments depicted in the drawings as appended.

The accompanying drawings are included to provide a further understanding of the present invention, are incorporated in, and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts. The numbering of method steps is done for the purpose of distinguishing between them and does not necessarily imply a temporal order although a temporal order according to the numbering is possible. In particular, one or more method steps may be performed at the same time, overlapping one another and/or the like. Although the method is presented herein in a comprehensive manner including several steps, it shall be understood that most of the steps are not essential and only provide advantageous additional benefit.

In the figures:
- Fig. 1: shows a schematic illustration of a beam apparatus according to an embodiment of the present invention and of a vacuum-tight enclosure according to another embodiment of the present invention;
- Fig. 2: shows an isometric depiction of the vacuum-tight enclosure of Fig. 1;
- Fig. 3: shows an exploded isometric depiction of the vacuum-tight enclosure of Fig. 1 and Fig. 2;
- Fig. 4: an exploded view of a beam apparatus according to an embodiment of the present invention;
- Fig. 5: a schematic illustration of a vacuum-tight enclosure according to another embodiment of the present invention;
- Fig. 6: a schematic illustration of a deployment of the beam apparatus in a shower mode configuration;
- Fig. 7: a schematic illustration of a deployment of the beam apparatus in a fountain mode configuration;
- Fig. 8: shows a schematic flow diagram illustrating a method according to an embodiment of the present invention for manufacturing a vacuum-tight enclosure for a beam apparatus;
- Fig. 9: shows a schematic block diagram illustrating a data storage medium according to yet another embodiment of the present invention; and
- Fig. 10: shows a schematic illustration of a beam apparatus according to the prior art.

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

### DETAILED DESCRIPTION OF THE DRAWINGS

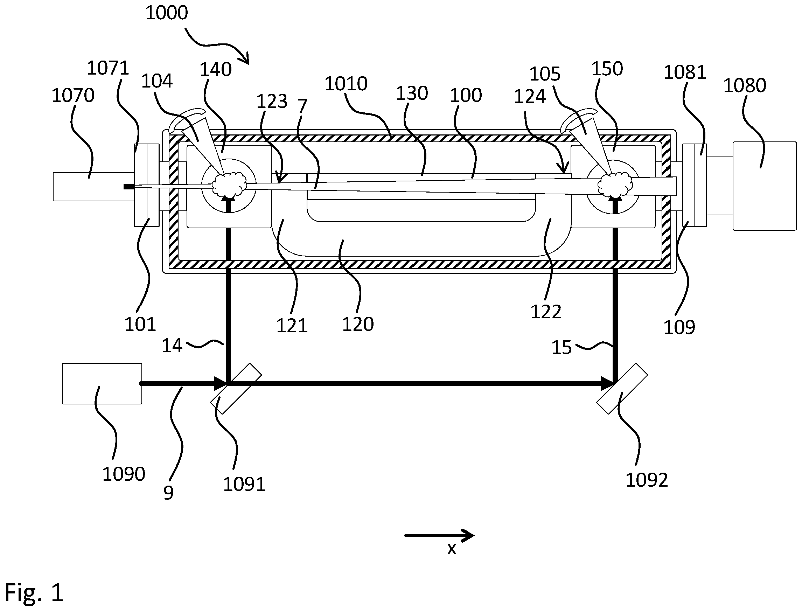

Fig. 1 shows a schematic block diagram illustrating a vacuum-tight enclosure 100 according to an embodiment of the first aspect of the present invention, as well as a beam apparatus 1000 (e.g., an atomic beam clock) according to an embodiment of the second aspect of the present invention.

The beam apparatus 1000 comprises the vacuum-tight enclosure 100, a magnetic shield 1010 provided around the vacuum-tight enclosure 100, a laser arrangement (including in particular a laser source 1090), a particle beam source container 1070, and a vacuum source 1080, e.g. a vacuum pump. In the following, as an example for the particle beam source container 1070, a container with an atomic beam source will be described (for instance, Cesium atoms), and accordingly it will be described as generating an atomic beam 7. It shall be understood, however, that a molecular beam source container, generating a molecular beam, may be used equally well. Although the invention also describes and provides a particle beam source container 1070 with particularly advantageous features, it shall be understood that a conventional atomic beam source container may be used as well.

The vacuum-tight enclosure 100 is provided with a (particle) beam input interface 101, configured such as to receive a particle beam source output interface 1071 of the particle beam source container 1070 and to form a vacuum-tight seal with it.

The vacuum-tight enclosure 100 has a generally longitudinal shape (here arranged, without any restrictions on generality, along an x axis), with the beam input interface 101 at one longitudinal end, and a vacuum source interface 109 at another, opposite longitudinal end. The vacuum source interface 109 is configured such as to receive a vacuum source output interface 1081 of the vacuum source 1080 and to form a vacuum-tight seal with it. With both the particle beam source output interface 1071 and the vacuum source output interface 1081 vacuum-tightly connected to the vacuum-tight enclosure 100, a vacuum is creatable and maintainable within the vacuum-tight enclosure 100.

In contrast to the prior art, a magnetic shield 1010 is arranged outside of the vacuum-tight enclosure 100, such that it is exposed to normal atmosphere on both sides (inside and outside) even during use of the beam apparatus 1000. The magnetic shield 1010 may comprise, or consist of, a metal or alloy with high magnetic permeability, such as mu-metal.

Moreover, the beam apparatus 1000 is configured such that normal atmosphere will be present between the magnetic shield 1010 and the vacuum-tight enclosure 100 at all times, even when the beam apparatus 1000 is in use and the vacuum source 1080 is active. By comparing Fig. 1 and Fig. 10, it is evident how much smaller the volume under vacuum is according to the present invention. Accordingly, the vacuum source 1080 can be provided with, ceteris paribus, smaller dimensions, capability, or capacity, when compared to the prior art.

The laser arrangement comprises, in the shown example, a laser source 1090, and an optical beamsplitter 1091, arranged and configured to split the laser beam 9 generated by the laser source 1090 into a first, reflected portion (forming an optical preparation laser beam, in this embodiment specifically an optical pumping laser beam 14) and a second, transmitted portion (forming an optical detection laser beam 15). The beamsplitter 1091 may be, for example, a plate beam splitter (typically a wedged glass plate with partially reflective coating) or a cubic beamsplitter, made of triangular prisms glued together.

The vacuum-tight enclosure 100 comprises a first optical interaction volume 140, arranged preferably directly after the beam input interface 101 in the path of the atomic beam 7. Depending on the design of the particle beam source container 1070, the particle beam source 1070 container and/or the beam input interface 101 may be provided with a collimator, and/or any other features for manipulating the atomic beam 7.

The collimator may be a passive collimator configured to permit only atoms with velocity directions close to the axis of the collimator (i.e. along the x axis) to pass through. Preferably, the collimator is tightly sealed to the particle beam source container 1070 to ensure that uncollimated atoms do not leak to the atomic beam region.

In the first optical interaction volume 140, the atoms of the atomic beam 7 are, during operation of the beam apparatus 1000, prepared either by optical pumping using laser radiation (as shown in Fig. 1 with respect to the optical pumping laser beam 14) or by light from a lamp or by means of a magnetic state selection. For magnetic state selection, beam deflection may be caused by a strong inhomogeneous magnetic field formed around a specially shaped permanent magnet interacting with the atomic beam 7. It shall be understood that the vacuum-tight enclosure 100 and/or the beam apparatus 1000 according to the present invention may be configured to accommodate and effect any kind of known interaction with the atomic beam 7 within the first optical interaction volume 140; the interaction with the optical pumping laser beam 14 as one kind of preparation laser beam is shown here as one preferred example.

In some variants, the first optical interaction volume 140 is additionally configured to enable or allow laser cooling for slowing atoms of the atomic beam 7 (or the molecules of a molecular beam, if present). For this, the first optical interaction volume 140 may comprise one or more additional vacuum-tight optical entry ports, each configured for receiving and transmitting a respective cooling laser beam. Typically, such optical entry ports for cooling laser beams are provided in opposing pairs, e.g. one, two, or three opposing pairs.

After the interaction within the first optical interaction volume 140 (the details of which will be described shortly), the atomic beam 7 will leave the first optical interaction volume 140 and, preferably immediately, enter a first arm 121 of a microwave cavity 120, specifically a U-shaped Ramsey cavity. When the beam apparatus 1000 is in operation, microwaves are coupled into the microwave cavity 120 using a microwave antenna of the beam apparatus 1000 (not shown in Fig. 1). In other words, the microwave cavity 120 is radiofrequency-driven (or: RF-driven). In the embodiment shown in Fig.1, the hollow inside of the first arm 121 of the microwave cavity 120 provides a first microwave interaction region 123, and the hollow inside a second arm 122 of the microwave cavity 120 provides a second microwave interaction region 124.

In the drawings, the microwave cavity 120 is shown as essentially U-shaped itself, or, in other words, as consisting of a U-shaped portion. For the sake of simplicity in the description, this variant will be mostly described in the following.

However, as has been described in the foregoing, it is equally possible that the microwave cavity 120 comprises at least one U-shaped portion but may comprise differently-shaped portions or additional U-shaped portions as well. For example, the microwave cavity 120 could be provided with two, three, four or more U-shaped portions arranged in a rotational symmetry about a longitudinal axis of the vacuum-tight enclosure 100 and connecting the same microwave interaction regions 123, 124, potentially with an according number of microwave antennae.

In the first and second microwave interaction regions 123, 124, during operation of the beam apparatus 1000, the atoms of the atomic beam 7 undergo a near-resonant transition between ground state hyperfine levels; the local oscillator frequency is locked to the corresponding atomic resonance with m_{F}=0 referred to as the clock transition. Typically either Rabi or Ramsey microwave interaction is applied in the atomic beam frequency standards, corresponding to a single continuous microwave interaction region (Rabi) and to two short separated microwave interaction regions (Ramsey) respectively. The atoms are exposed to this external microwave field when flying through the RF driven microwave cavity 120.

In the embodiment shown in Fig. 1, a U-shaped Ramsey-type microwave cavity 120 is used, although other types of microwave cavities, e.g. Rabi type cavities, could be provided alternatively. It shall be understood that also other interaction schemes, other methods of preparing the molecular or atomic beam 7, and so on may be provided on, with, or around the vacuum-tight enclosure 100 according to the present invention or the beam apparatus 1000 according to the present invention.

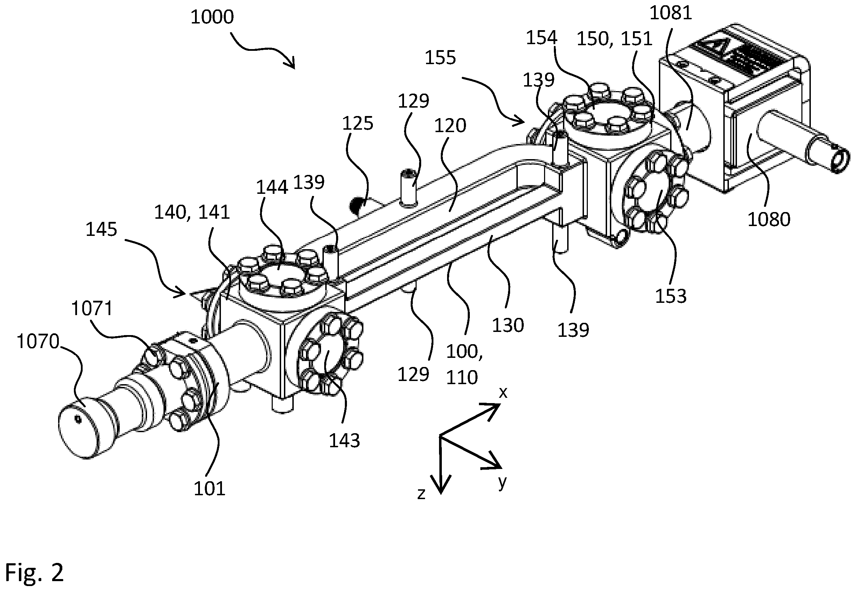

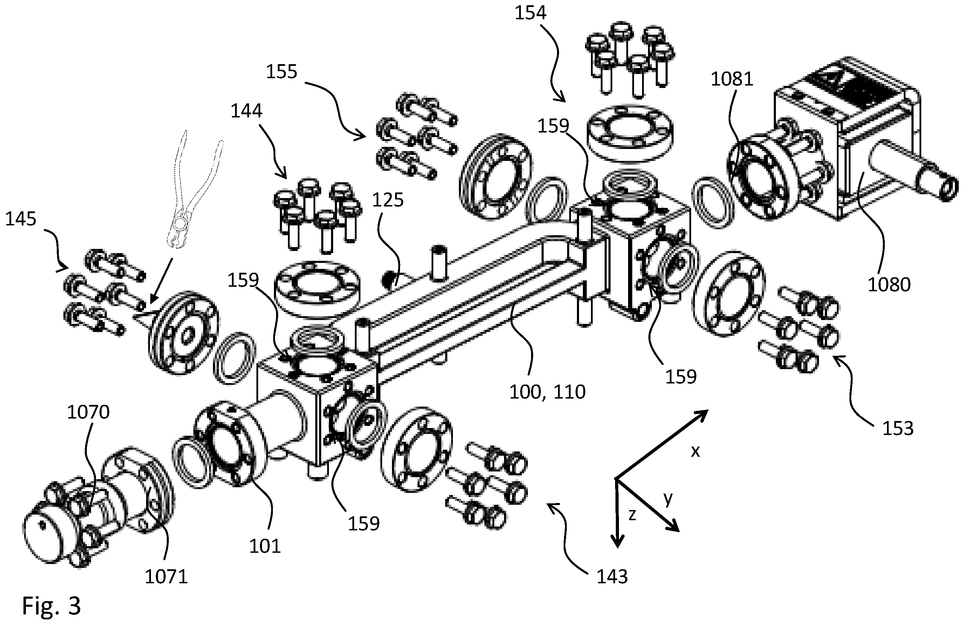

The atomic states with different m_{F} values may be energy-separated in a direct-current magnetic field created uniformly in the central region between the microwave interaction regions 123, 124. So-called C-field coils are employed for this purpose and the entire atomic propagation region is shielded from external magnetic field perturbations (in particular quasi-static magnetic fields like the Earth's magnetic field) with one layer, or preferably a plurality of layers, of mu-metal. The positioning of the C-field coils will be described in more detail in the following, pertinent to Fig. 2 and Fig. 3.

After leaving the first microwave interaction region 123, the atomic beam 7 immediately enters a proximal end (in the x direction) of a straight hollow beam enclosure 130, preferably formed from the same material as the microwave cavity 120, e.g., stainless steel. The first optical interaction volume 140, the first microwave interaction region 123, and the straight hollow beam enclosure 130 may be directly adjacent to one another, thus further reducing the volume in which the vacuum needs to be maintained. The hollow beam enclosure 130 may have a cross-section with a round, oblong, or other shape. The beam enclosure 130 advantageously acts as a cutoff for high-frequency radiation (RF frequencies), i.e. as an electromagnetic shield providing a microwave cutoff frequency, shielding the atomic beam 7 travelling within. During operation of the beam apparatus 1000, the atomic beam 7 interacts with the DC magnetic field generated by the C-field coils.

The DC magnetic field generated by the C-field coils is preferably applied all along the atomic beam 7 between the two optical interaction volumes 140, 150, including the microwave interaction regions 123, 124. The aim of this DC magnetic field is to lift the degeneracy of the ground states; it is preferably kept as homogeneous as possible. The value of the DC magnetic field is advantageously actively stabilized, while the homogeneity is achieved by passive magnetic shielding.

At the distal end (in the x direction) of the beam enclosure 130, the atomic beam 7 immediately enters the second microwave interaction region 124 provided within the second arm 122 of the microwave cavity 120, where it interacts with the microwave radiation, and then enters a second optical interaction volume 150.

Thus, the first optical interaction volume 140, the first microwave interaction region 123, a magnetic field interaction region within the straight hollow beam enclosure 130, the second microwave interaction region 124, and the second optical interaction volume 150 are all arranged linearly, with the straight hollow beam enclosure 130 interconnecting the first and the second microwave interaction regions 123, 124.

In the shown embodiment, the second portion of the laser beam 9, after being transmitted by the beamsplitter 1091, is reflected by a reflective mirror 1092 into the second optical interaction volume 150 as the optical pumping laser beam 14. It shall be understood that other optical guiding elements may be used as well, for example, lenses, prisms, and the like.

Fig. 2 shows an isometric depiction of the vacuum-tight enclosure 100. It clearly shows how the main body 110 of the vacuum-tight enclosure 100 is monolithically formed, e.g. of stainless steel, and structurally robust, with the microwave cavity 120 serving as the main structural backbone (or: mechanical support structure).

A microwave source 125 (e.g. a microwave antenna) is attached (e.g., welded or soldered) to the peak point of the U-shape of the microwave cavity 120, for coupling microwave radiation into the microwave cavity 120.

Stainless steel as a material of the vacuum-tight enclosure 100 facilitates the welding or soldering of the microwave source 125 to it. However, as has been mentioned before, the vacuum-tight enclosure 100 may also comprise, or consist of, copper, titanium, aluminium, and/or any compound or alloy thereof.

Mounting studs 129, 139 protrude from the microwave cavity 120 perpendicularly to a plane in which the U-shape of the microwave cavity 120 is arranged, on either side (only three mounting studs 129, 139 on one side are shown here; three more are arranged be on the other side, see also Fig. 3).

An orthogonal 3D coordinate system is shown in the lower part of Fig. 2, with the positive x direction extending along the longitudinal extent of the vacuum-tight enclosure 100 and along the intended travel direction of the atomic beam 7 within the straight hollow beam enclosure 130, the positive y direction extending along the straight part of the arms 121, 122 of the microwave cavity, and the positive z direction completing a right-hand orthogonal coordinate system.

One mounting stud 139 on each side protrudes from the first arm 121 of the microwave cavity 120, a second mounting stud 139 protrudes on each side from the second arm 122 of the microwave cavity 120, and a third mounting stud 129 protrudes on each side from the peak point of the side surfaces of the microwave cavity 120, each in the (positive or negative) z direction.

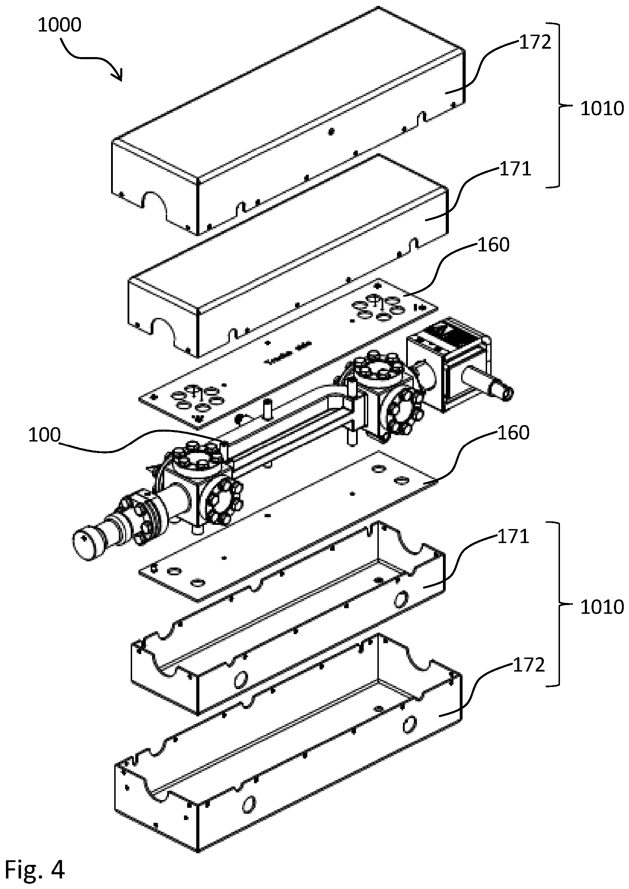

The mounting studs 129, 139 are provided for printed circuit boards of the beam apparatus 1000 to be attached thereto (see printed circuit board 160 in Fig. 4). The printed circuit boards may in particular comprise magnetic DC C-field coils printed thereon, so that by energizing these C-field coils on the printed circuit boards, a DC magnetic field along the z direction, i.e. perpendicular to the straight hollow beam enclosure 130 and parallel to the mounting studs 129, 139, is generated. The C-field coils may be formed (e.g., printed) on the printed circuit boards in an essentially spiral- or maze-like pattern. The C-field coils may essentially follow the outline of the printed circuit boards 160 in their shape.

Similarly, additional elements of the beam apparatus 1000, such as thermoregulation elements (e.g. heating elements, temperature sensors and the like), electronic control parts for the C-field coils, photodetection modules and/or the like, are preferably placed outside of the vacuum-tight enclosure 100, further simplifying the overall structure of the beam apparatus 1000, in particular as regards handling, maintenance, and production time and cost. As has been mentioned before, this advantageously allows easier access to all of these elements, for example for the sake of maintenance, replacement, upgrading, and the like, without the need (as in the prior art) for opening any vacuum envelope. Some elements, like optical ports, the vacuum source 1080 (or: vacuum pump), getters, or the beam source would require opening e.g. flange seals, however in a non-destructive manner. This is in contrast to the prior art, where the entire housing has to be milled and cut in order to access the interior elements.

The first optical interaction volume 140 is essentially formed (or: housed, or: delineated, or: encased) by a first housing portion 141 of the vacuum-tight enclosure 100. The second optical interaction volume 150 is essentially formed (or: housed, or: delineated, or: encased) by a second housing portion 151 of the vacuum-tight enclosure 100. The first housing portion 141, the second housing portion 151, the straight hollow beam enclosure 130, and the microwave cavity 120 may all contribute in forming an outer contour of the vacuum-tight enclosure 100 (and of its main body), as is also visible in Fig. 2.

The first and the second housing portions 141, 151 may be essentially cubic or oblong, although other shapes are possible as well. The cubic or oblong shape is advantageous in that standard optical ports can easily be integrated therein.

Fig. 2 shows a first optical entry port 143 being provided within the first housing portion 141, to allow access of the optical pumping laser beam 14 to the first optical interaction volume 140. In the shown embodiment, the first optical entry port 143 is arranged in an outer surface in the positive y direction of the first housing portion 141. For example, the first optical entry port 143 may be vacuum-tightly attached to a corresponding optical port interface 159 formed in the main body 110 of the vacuum-tight enclosure 100.

A second optical entry port 153 is provided within the second housing portion 151, to allow access of the optical detection laser beam 15 to the second optical interaction volume 150. In the shown embodiment, the second optical entry port 153 is arranged in an outer surface in the positive y direction of the second housing portion 151.

Fig. 3 shows an exploded view of the vacuum-tight enclosure 100, where in particular the beam source container 1070 and the vacuum source 1080 are shown as separate therefrom. The exploded view illustrates the positioning of various optical ports especially well, which will be described in the following. Also clearly visible in Fig. 3 is the main body 110 of the vacuum-tight enclosure 100, comprising (or even essentially consisting of) the microwave cavity 120, the first housing portion 141, the second housing portion 151, the mounting studs 129, 139, and a plurality (here: six) of optical port interfaces 159.

Fig. 3 illustrates that a first optical detection port 144 is formed (specifically, vacuum-tightly attached to an optical port interface 159, e.g. as shown with a sealing ring and a number of bolts or screws) on a side of the first housing portion 141 perpendicular to the first optical entry port 143, here in an outer surface in the negative z direction.

The optical pumping laser 14 may enter the first interaction volume 140 within the first housing portion 141 via the first optical entry port 143 and interact therein with the atomic or molecular beam 7, whereby fluorescent light is generated. This generated fluorescence 104 may be detected, from outside of the vacuum-tight enclosure 100, in particular for use in consecutive active control of the laser beam 9 by the laser source 1090, preferably for frequency and/or power stabilization.

Similarly, a second optical detection port 154 is formed on a side of the second housing portion 151 perpendicular to the one in which the second optical entry port 153 is arranged, here in an outer surface in the negative z direction. The optical detection laser beam 15 may enter the second interaction volume 150 within the second housing portion 151 via the second optical entry port 153 and interact therein with the atomic or molecular beam 7, whereby fluorescent light is generated. This generated fluorescence 105 may then be detected, from outside of the vacuum-tight enclosure 100, to provide the main measuring signal of the beam apparatus 1000.

In the variant depicted in Fig. 2 and Fig. 3, after its interaction, the optical detection laser beam 15 is no longer necessary and in fact, becomes undesired as it might scatter at some element, and the scattered light could add noise to the fluorescence 105.

For these reasons, the second housing portion 151 may be provided with a beam sink 155 (or: second beam sink 155, to indicate its location in the second housing portion 151). The beam sink 155 is configured to absorb the optical detection laser beam 15 after its interaction within the second interaction volume 150. For example, it may comprise an absorbent plate (e.g. made from glass), a beam dump (e.g. a metallic beam dump), anodized aluminium and/or graphite. In this way, undesired reflections of light back into the second interaction volume 150 are reduced or eliminated.

The beam sink 155 is thus arranged in line with the second optical entry port 153, i.e. in negative y direction in Fig. 2 and Fig. 3, in another surface of the second housing portion 151. It may be attached to another optical port interface 159 formed in the second housing portion 151, e.g. as shown via a sealing ring and bolts or screws. In principle, the beam sink 155 could be manufactured monolithically together with the main body 110 of the vacuum-tight enclosure 100. However, separately manufacturing, and then attaching, beam sink 155 and main body 110 has the advantage that one may choose different materials for the two.

The same arrangement may be made in the first housing portion 141, although typically there is less need to avoid scattered light after the interaction. For this reason, at the corresponding position, opposite the first optical entry port 143, in negative y direction, other functional devices may be vacuum-tightly provided, or vacuum-tightly attached to an optical port interface 159 arranged there. For example, a connection 145 for a preliminary evacuation of the vacuum-tight enclosure 100 for providing a vacuum level that is maintainable by the vacuum pump 1080 may be provided there, which is later pinched off when the vacuum-tight enclosure 100 comprises a vacuum, as schematically indicated in Fig. 3.

The connection 145 may be considered as an optical port, or an optical device, since the optical pumping laser beam 14 will interact with it after its interaction within the first optical interaction volume 140. It may be provided with a beam sink. Other solutions, not involving the connection 145, may be provided as well.

As has been described in the foregoing, the fluorescence 104 of the optical pumping laser beam 14 within the first optical interaction volume 140 may be observed through the first optical detection port 144, for example as part of a closed-loop control for laser stabilization. Accordingly, the beam apparatus 1000 may comprise a photodetection module arranged to measure the fluorescence of the laser beam within the first optical interaction volume 140, and to output a measuring signal based therein to a laser source controller of the laser source of the beam apparatus 1000.

Similarly, the fluorescence 105 of the optical detection laser beam 15 within the second optical interaction volume 150 may be observed through the second optical detection port 155, for example for providing a high-precision, high-accuracy clock signal. Accordingly, the beam apparatus 1000 may comprise a photodetection module arranged to measure the fluorescence 105 of the optical detection laser beam 15 generated within the second optical interaction volume 150, and to output a clock signal based thereon, or to output a measuring signal based thereon, in particular for the generating of a clock signal.

It shall be understood that the arrangement of the optical ports/devices 143-145, 153-155 may be varied from the one shown in Fig. 2 and Fig. 3. However, it is preferred that as the optical detection ports 144, 154 are arranged in perpendicular to the respective optical entry ports 143, 153, and that any beam sink 155 is arranged in line with the corresponding optical entry port 153.

As has been described in the foregoing, also the beam source container 1070 of the beam apparatus 1000 may be formed in a novel way, which is made possible by the novel features of the present invention.

The beam source container 1070 may be formed as (or as comprising) a break-seal glass ampoule comprising the beam source, i.e. the molecules or atoms which are to form the molecular or atomic beam 7, for example, Cesium atoms.

The glass ampoule is enclosed within a tight metal tank, e.g., made from copper, as seen in Fig. 3. Since, according to the present invention, the beam source container 1070 is positioned outside of the volume under vacuum (unlike in the prior art, cf. Fig. 10), it is easily accessible from the outside. Thus, to break the glass ampoule within and to release the atomic/molecular vapor therefrom, it suffices to mechanically pinch the metal tank from the outside. As mentioned before, a collimator may be integrated inside a metallic gasket (e.g., a copper gasket) of the metal tank, being part of the beam source output interface 1071.

Fig. 3 also illustrates how the optical ports/devices 143-145, 153-155 described in the foregoing are attachable in a vacuum-tight manner to corresponding optical port interfaces 159 within the vacuum-tight enclosure 100.

The variant of Fig. 1-3 is especially advantageous for an atomic beam 7 that is a thermal atomic beam, which may in particular travel with a speed of between 50 m/s and 300 m/s, e.g., with 200 m/s. In an embodiment for such an application, the straight hollow beam enclosure 130 may have a length of between 8 cm and 22 cm, preferably between 10 cm and 15 cm, for example 14 cm. The thermal atomic beam 7 is preferably prepared using a mechanical collimator of the atomic oven 70.

Fig. 4 shows an exploded view of a beam apparatus 1000 according to an embodiment of the present invention. Printed circuit boards 160 are shown that will be attached at the mounting studs 129, 139. Two shielding layers 171, 172 of a magnetic shield 1010 are shown on each side (in positive and negative z direction), for example, two casings of mu-metal. The shielding layers include in inner shielding layer 171 and an outer shielding level 172, separated from one another preferably by an air space (open to atmosphere).

Although in the exemplary embodiments of Fig. 1-4 an optical pumping laser beam 14 was described as an instance of a preparation laser beam, it shall be understood that any other kind of optical preparation laser beam may be used as well, for example optical cooling laser beams. Optical cooling laser beams may be used in particular in the first optical interaction volume 140, in order to more precisely and narrowly align the molecular or atomic beam 7 received at the beam input interface 110.

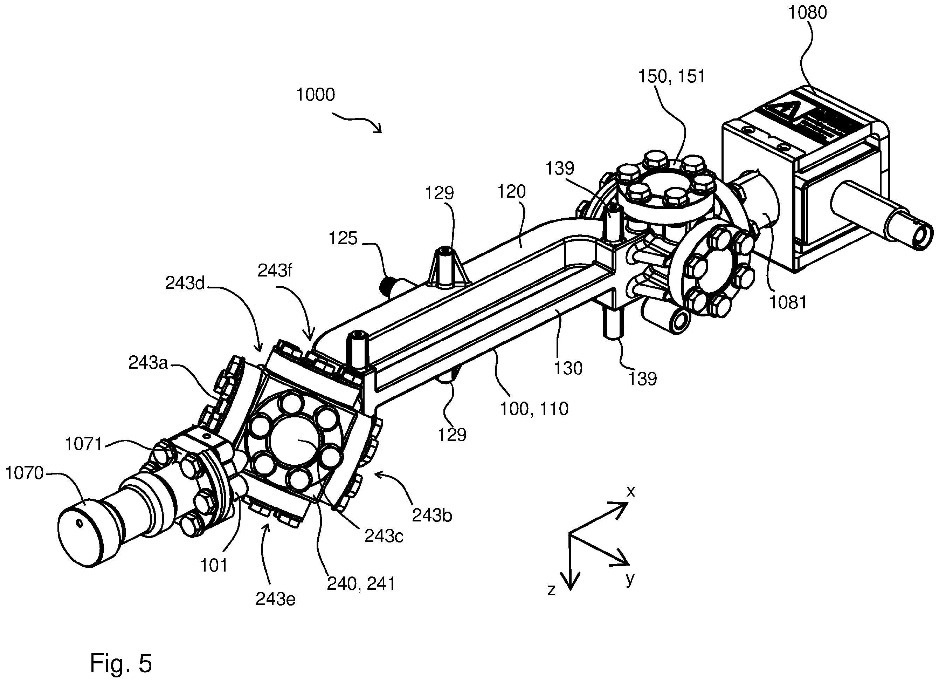

Fig. 5 shows a schematic block diagram illustrating a vacuum-tight enclosure 200 according to another embodiment of the first aspect of the present invention, as well as a beam apparatus 1000 (e.g., an atomic beam clock) according to another embodiment of the second aspect of the present invention.

The vacuum-tight enclosure 200 of Fig. 5 is in most parts identical to the vacuum-tight enclosure 100 of Fig. 1, with a few differences that will be described in the following.

Instead of the first optical interaction volume 140 with its first housing portion 141 of the vacuum-tight enclosure 100, the vacuum-tight enclosure 200 comprises a first optical interaction volume 240 with its first housing portion 241.

Instead of the first optical entry port 143, the first optical detection port 144 and/or the connection 145, the first housing portion 241 of the vacuum-tight enclosure 200 comprises a plurality of vacuum-tight optical entry ports 243a, 243b, 243c, 243d, 243e, 243f, here six vacuum-tight optical entry ports. Preferably, the housing portion 241 comprises a plurality of opposing pairs of vacuum-tight optical entry ports, such as three pairs - 243a and 243b, 243c and 243d, 243e and 243f - as shown in Fig. 5.

Each of the plurality of vacuum-tight optical entry ports 243a-f is advantageously configured for receiving a respective optical cooling laser beam (as one kind of an optical preparation laser beam), in particular for shaping the molecular or atomic beam 7 received at the beam input interface 101 of the vacuum-tight enclosure 200, in particular for focusing the atomic or molecular beam 7 received at the beam input interface 101.

The variant of Fig. 5 is especially advantageous for an atomic beam 7 that is a cold atom beam, which may in particular travel with a speed of between 0,5 m/s and 3 m/s. In an embodiment for such an application, the straight hollow beam enclosure 130 may have a length of between 2 cm and 6 cm, preferably between 3 cm and 5 cm, for example 4 cm.

In some variants, it may be that a collection of molecules or atoms (such as a vapour) is provided by the outside source 1070, which is then only by the preparation within the first optical interaction volume 240 shaped into the molecular or atomic beam 7 that then enters the straight hollow beam tube 130, for example by optical molasses created by optical cooling lasers entering through three pairs of opposing vacuum-tight optical entry ports 243a-243-f as shown.

It shall be understood that the embodiment of Fig. 1-4 may be adapted with any of the features described with respect to the embodiment of Fig. 5 and vice versa. In particular, the first housing portion 141 of the optical interaction volume 140 of the vacuum-tight enclosure 100 of Fig. 1-4 may be, in addition to what has been described there, provided with one or more vacuum-tight optical entry ports 243a-f (or one, two, or three pairs of such optical entry ports 243a-f), in particular for preparing a cold atom beam.

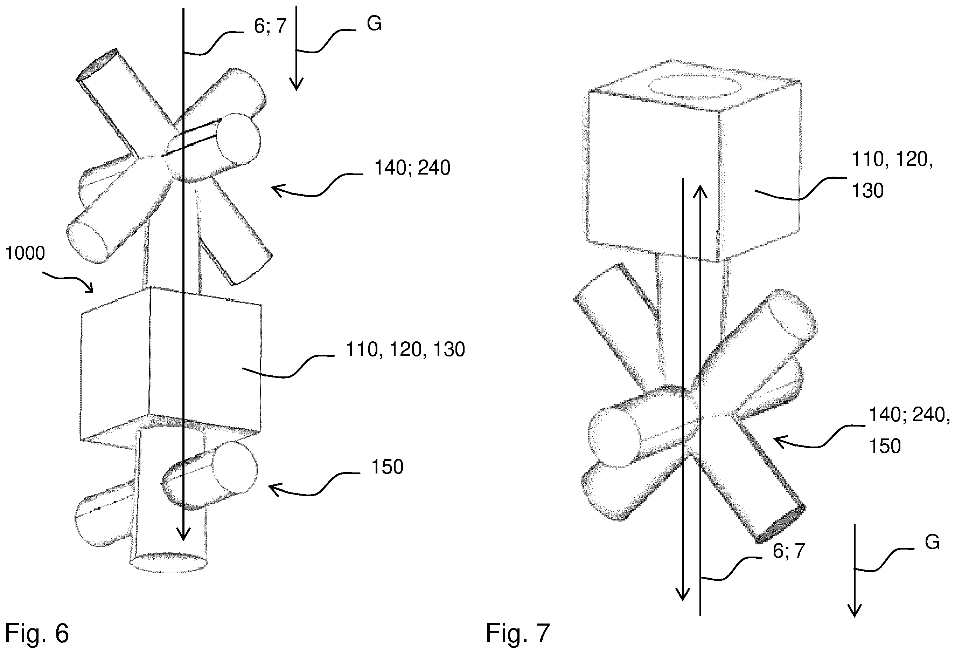

Fig. 6 schematically illustrates that any of the beam apparatus 1000 described herein may be configured to be deployed in a shower mode configuration, wherein most of the elements of the beam apparatus 1000 are omitted for the sake of simplicity. In the shower configuration, the molecular or atomic beam 7, or a collection of input molecules or input atoms 6 in another form (e.g. in vapour form), is/are configured and arranged to enter the beam vacuum-tight enclosure 100; 200 along the direction of Gravity G and are moved, or aided in their movement, by Gravity from the first optical interaction volume 140;240 through the hollow beam enclosure 130 to the second optical interaction volume 150. Although the schematic depiction of beams in Fig. 6 suggests the embodiment of Fig. 5, any of the embodiments described herein, including the embodiment of Fig. 1-4.

Fig. 7 schematically illustrates another mode of deployment to which any beam apparatus 1000 described herein can be easily adapted: the fountain mode.

In the fountain mode, the molecular or atomic beam 7 is configured and arranged to enter the vacuum-tight enclosure 100; 200 against the direction of Gravity G, passes through the optical interaction volume 140; 240 in the first housing portion 141; 241 while slowing down, enters the hollow beam enclosure 130, and loses its momentum therein or thereafter. Its constituent molecules or atoms then are accelerated again, typically in a parabolic trajectory, by Gravity G and pass the same first housing portion 141; 241 again, which also acts as, or provides, the second optical interaction volume 150.

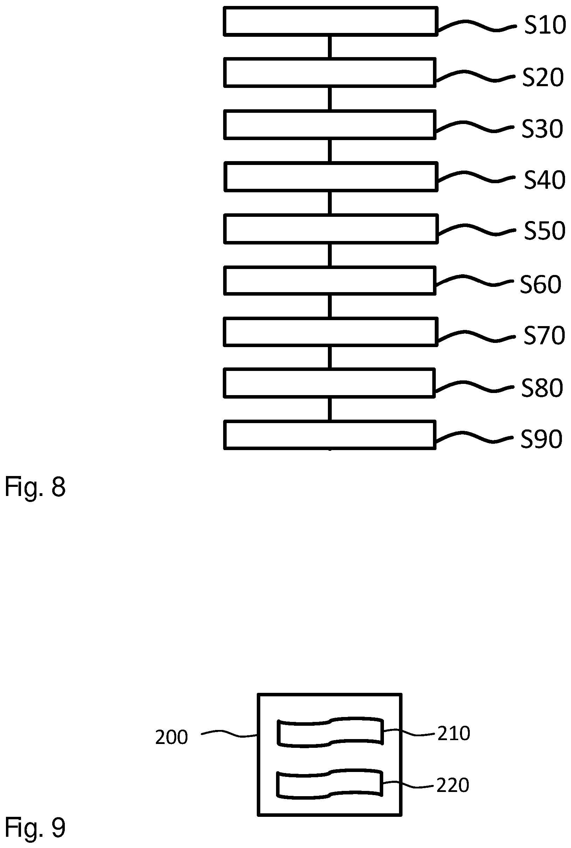

Fig. 8 shows a schematic flow diagram illustrating a method according to another embodiment of the present invention, i.e., a method for manufacturing a vacuum-tight enclosure. This method may be used to produce any vacuum-tight enclosure according to any embodiment of the first aspect of the present invention, in particular the vacuum-tight enclosure as has been described in the foregoing with respect to Fig. 1-3 or Fig. 5. Accordingly, the method may be adapted according to all options, variants, and refinements of embodiments that have been described for the vacuum-tight enclosure according to the first aspect of the present invention, and vice versa.

The method comprises, as a step S10, additively manufacturing the vacuum-tight enclosure 100; 200 (or at least its main body 110) monolithically, preferably from stainless steel, with a beam input interface 101 for receiving a molecular or atomic beam 7, a first optical interaction volume 140; 240, a microwave cavity 120, a second optical interaction volume 150, a straight hollow beam enclosure 130 for enclosing a molecular or atomic beam 7 (which can be input at the beam input interface 101) between the first optical interaction volume 140; 240 and the second optical interaction volume 150, and a vacuum source interface 109.

The method may comprise additional steps, such as any or all of:
welding S20 a microwave antenna 125 to the microwave cavity 120,
arranging S30 a non-evaporation getter material within the vacuum-tight enclosure 100; 200,
installing S40 optical ports 143, 144, 145, 153, 154, 155; 243a-243f within housing portions 141, 151; 241, 151 forming the first optical interaction volume 140; 240 and/or the second optical interaction volume 150,
attaching S50 printed circuit boards (in particular comprising DC magnetic field inducing coils) to the vacuum-tight enclosure 100; 200 (in particular to the microwave cavity 120, especially on mounting studs 129, 139),
providing S60 a magnetic shield 1010 surrounding the vacuum-tight enclosure 100; 200,
arranging S70 additional elements between the vacuum-tight enclosure 100; 200 and the magnetic shield 1010 as has been described in the foregoing,
attaching S80 a beam source container 1070 to the beam input interface 101,
attaching S90 a vacuum source 1080 to the vacuum source interface 109, and/or the like.

The numerical order of the method steps does not indicate that the steps necessarily have to be performed in that order, although the numerical order may be partially or completely followed. It shall be understood that some or all of these steps may be left out, or replaced by other steps.

Fig. 9 illustrates a data storage medium 300 according to another embodiment of the present invention. The computer-readable, non-transient data storage medium 300 comprises 3D structure data 310 representing a vacuum-tight enclosure 100; 200 according to an embodiment of the first aspect of the present invention, and further comprises control instructions 320 (e.g., included in an executable program code) configured to instruct an additive manufacturing device to additively manufacture the vacuum-tight enclosure according to the 3D structure data 310.

### List of reference signs

- 1: beam apparatus
- 2: vacuum envelope
- 4: calibration radiation
- 5: detection radiation
- 6: collection of input molecules or input atoms
- 7: atomic or molecular beam
- 9: laser beam
- 10: magnetic shield
- 14: optical pumping laser beam
- 15: optical detection laser beam
- 20: microwave cavity
- 70: atomic oven
- 80: vacuum source
- 90: laser source
- 91: beamsplitter
- 92: reflective mirror
- 100: vacuum-tight enclosure
- 101: beam input interface
- 104: fluorescence of the optical pumping laser beam
- 105: fluorescence of the optical detection laser beam
- 109: vacuum source interface
- 110: main body of the vacuum-tight enclosure
- 120: microwave cavity
- 121: first arm of the microwave cavity
- 122: second arm of the microwave cavity
- 123: first microwave interaction region
- 124: second microwave interaction region
- 125: microwave source
- 129: mounting stud
- 130: hollow beam enclosure
- 139: mounting studs
- 140: first optical interaction volume
- 141: first housing portion
- 143: first optical entry port
- 144: first optical detection port
- 145: first beam sink
- 150: second optical interaction volume
- 151: second housing portion
- 153: second optical entry port
- 154: second optical detection port
- 155: second beam sink
- 159: optical port interfaces
- 160: printed circuit board
- 171: inner magnetic shield layer
- 172: outer magnetic shield layer
- 200: vacuum-tight enclosure
- 240: first optical interaction volume
- 243a-f: first optical entry ports
- 300: data storage medium
- 310: 3D structure data
- 320: control instructions
- 1000: beam apparatus
- 1010: magnetic shield
- 1070: particle beam source container
- 1071: particle beam source output interface
- 1080: vacuum source
- 1081: vacuum source output interface
- 1090: laser source
- 1091: beamsplitter
- 1092: reflective mirror

- G: direction of Gravity

## Claims

1. A vacuum-tight enclosure (100; 200) for a beam apparatus (1000), the vacuum-tight enclosure (100; 200) being essentially formed of:
a beam input interface (101) for receiving a molecular or atomic beam (7),
a first optical interaction volume (140),
a first optical interaction volume (140, 240),
a microwave cavity (120) comprising a U-shaped portion,
a second optical interaction volume (150),
a straight hollow beam enclosure (130) for enclosing the molecular or atomic beam (7) between the first optical interaction volume (140) and the second optical interaction volume (150), ensuring propagation in vacuum during use, wherein the straight hollow beam enclosure (130) extends essentially between two end points of the U-shaped portion of the microwave cavity (120) and interconnects them,
and
a vacuum source interface (109), and
a plurality of optical port interfaces (159),
such that a vacuum is generatable within the vacuum-tight enclosure (100; 200) when a vacuum source (1080) is vacuum-tightly attached to the vacuum source interface (109), a beam source container (1070) is vacuum-tightly attached to the beam input interface (101) and the plurality of optical port interfaces (159) are vacuum-tightly sealed.

2. The vacuum-tight enclosure (100; 200) of claim 1,
wherein the first optical interaction volume (140; 240) is formed by a first housing portion (141; 241) arranged between the beam input interface (101) and the straight hollow beam enclosure (130),
the first housing portion (141; 241) comprising at least one vacuum-tight first optical entry port (143; 243a-f) for receiving a respective optical preparation laser beam (14) from outside of the vacuum-tight enclosure (100), and for allowing an interaction of the respective optical preparation laser beam (14) received through the respective first optical entry port (143; 243a-f) with the molecular or atomic beam (7) received at the beam input interface (101).

3. The vacuum-tight enclosure (100) of claim 2,
wherein the first housing portion (141; 241) further comprises a vacuum-tight first optical detection port (144),
for collecting an atomic fluorescence (104)
or for allowing the optical preparation laser beam (14), in particular an optical pumping laser beam, to leave the vacuum-tight enclosure (100) after said interaction.

4. The vacuum-tight enclosure (200) of claim 2 or claim 3,
wherein the first optical interaction volume (240) comprises a plurality of vacuum-tight optical entry ports (243a-f), in particular a plurality of opposing pairs of vacuum-tight optical entry ports (243a-f) such as two or three pairs, each of the plurality of vacuum-tight optical entry ports (243a-f) configured for receiving a respective optical cooling laser beam, preferably for shaping the molecular or atomic beam (7) received at the beam input interface (101), more preferably for focusing the molecular or atomic beam (7) received at the beam input interface (101).

5. The vacuum-tight enclosure (100) of any of claims 1 to 4,
wherein the second optical interaction volume (150) is formed by a second housing portion (151) arranged between the atomic beam enclosure (130) and the vacuum source interface (109),
the second housing portion (151) comprising a vacuum-tight second optical entry port (153) for receiving an optical detection laser beam (15) from outside of the vacuum-tight enclosure (100) and for allowing an interaction of the optical detection laser beam (15) received through the second optical entry port (153) and the molecular or atomic beam (7), and
comprising a vacuum-tight second optical detection port (154),
for collecting an atomic fluorescence (105) after said interaction,
or for allowing the optical detection laser beam (15) to leave the vacuum-tight enclosure (100) after its interaction with the molecular or atomic beam (7).

6. The vacuum-tight (100) enclosure of any claims 2 to 5,
wherein the first housing portion (141) and/or the second housing portion (151) is formed in touch with the microwave cavity (120).

7. The vacuum-tight enclosure (100) of any of claims 2 to 6,
wherein the first housing portion (141) comprises a first beam sink configured to absorb the optical preparation laser beam (14) after its interaction with the molecular or atomic beam (7), and/or
wherein the second housing portion (151) comprises a second beam sink configured to absorb the optical detection laser beam (15) after its interaction with the molecular or atomic beam (7).

8. The vacuum-tight enclosure (100) of any of claims 1 to 7,
being formed essentially monolithically, preferably from metal, in particular by additive manufacturing.

9. The vacuum-tight (100) enclosure of any of claims 1 to 8,
wherein the beam input interface (101) is configured to receive the molecular or atomic beam (7) from a beam source container (1070) external to the vacuum-tight enclosure (100).

10. The vacuum-tight enclosure of any of claims 1 to 9,
wherein the hollow beam enclosure (130) acts as an electromagnetic shield providing a microwave cutoff frequency for the molecular or atomic beam (7) travelling within the hollow beam enclosure (130).

11. A beam apparatus (100) comprising:
the vacuum-tight enclosure of any of claims 1 to 10,
a beam source container (1070) removably attachable or attached to the beam input interface (101) in a vacuum-tight manner, and
a vacuum source (1080) removably attachable or attached to the vacuum source interface (109) in a vacuum-tight manner.

12. The beam apparatus (1000) of claim 11,
wherein the beam source container (1070) can be opened by direct physical manipulation from outside the vacuum-tight enclosure, and preferably comprises a break seal ampoule that can be broken by said direct physical manipulation.

13. The beam apparatus (1000) of any of claims 10 to 12,
further comprising a magnetic shield (110), wherein a volume between the magnetic shield (110) and the vacuum-tight enclosure (100) is open to ambient atmosphere.

14. The beam apparatus (1000) of any of claims 10 to 13,
further comprising at least one printed circuit board (160) attached to the outside of the vacuum-tight enclosure (110), the printed circuit board (160) comprising at least a coil structure for generating a magnetic field acting within the hollow beam enclosure, and optionally comprising photodetectors with corresponding trans-impedance amplification electronics.

15. A method for manufacturing a vacuum-tight enclosure (100), comprising a step of additively manufacturing (S10) a main body of the vacuum-tight enclosure (100) monolithically with
a beam input interface (101) for receiving a molecular or atomic beam (7),
a first beam interaction volume (140),
a microwave cavity (120) comprising a U-shaped portion,
a second beam interaction volume (150),
a straight hollow beam enclosure (130) for enclosing a molecular or atomic beam (7) between the first optical interaction volume (140) and the second optical interaction volume (140), wherein the straight hollow beam enclosure (130) extends essentially between two end points of the U-shaped portion of the microwave cavity (120) and interconnects them,
and
a vacuum source interface (109).
